(19) Europäisches Patentamt
European Patent Office
Office européen des brevets

(11) Veröffentlichungsnummer : **0 039 054**
**B1**

(12) # EUROPÄISCHE PATENTSCHRIFT

(45) Veröffentlichungstag der Patentschrift : **25.07.84**

(51) Int. Cl.³ : **C 09 B 29/08**, C 09 B 31/04, D 06 P 1/18

(21) Anmeldenummer : **81103087.3**

(22) Anmeldetag : **24.04.81**

(54) **Wasserunlösliche Azofarbstoffe, Verfahren zu ihrer Herstellung und ihre Verwendung.**

(30) Priorität : **28.04.80 DE 3016301**

(43) Veröffentlichungstag der Anmeldung : **04.11.81 Patentblatt 81/44**

(45) Bekanntmachung des Hinweises auf die Patenterteilung : **25.07.84 Patentblatt 84/30**

(84) Benannte Vertragsstaaten : **BE CH DE FR GB IT LI**

(56) Entgegenhaltungen :
**DE-A- 2 707 711**
**FR-A- 2 313 495**
**FR-A- 2 414 064**
**GB-A- 2 028 383**
**GB-A- 2 041 391**

(73) Patentinhaber : **CASSELLA Aktiengesellschaft**
**Hanauer Landstrasse 526**
**D-6000 Frankfurt am Main 61 (DE)**

(72) Erfinder : **Tappe, Horst, Dr.**
**Ringstrasse 9**
**D-6057 Dietzenbach (DE)**
Erfinder : **Löwenfeld, Rudolf, Dr.**
**Quellenweg 2**
**D-6072 Dreieich (DE)**
Erfinder : **Kosubek, Uwe**
**Am Vogelanger 28**
**D-6087 Büttelborn (DE)**
Erfinder : **Kallay, Maria**
**Kastanienweg 7d**
**D-6240 Königstein (DE)**

(74) Vertreter : **Urbach, Hans-Georg, Dr. et al**
**Hanauer Landstrasse 526**
**D-6000 Frankfurt am Main 61 (DE)**

EP 0 039 054 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue, wasserunlösliche Azofarbstoffe der allgemeinen Formel I

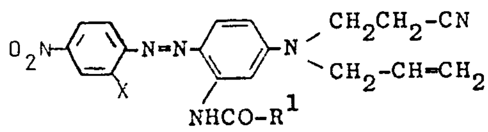

(I)

in der

X Wasserstoff, Chlor, Brom, Cyan oder Nitro und

$R^1$ Methyl oder Ethyl bedeuten, ihre Herstellung durch Diazotierung und Kupplung in an sich bekannter Weise und ihre Verwendung zum Färben und Bedrucken, hydrophober Fasermaterialien.

Aus der französischen Patentschrift 1 382 654 sind Farbstoffe der allgemeinen Formel

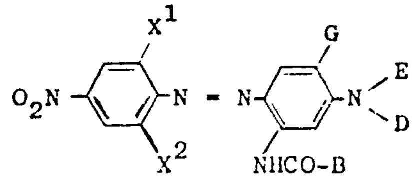

bekannt, wobei

$X^1$ Cyan, Nitro, Trifluormethyl, Alkylsulfonyl,

$X^2$ Wasserstoff, Chlor oder Brom,

B gegebenenfalls substituiertes Niederalkyl

G gegebenenfalls substituiertes Alkyl oder Alkoxy

E und D Niederalkyl bedeuten und Alkylreste auch ungesättigt und/oder verzweigt sein können.

Aus der DE-AS 1 164 971 sind Farbstoffe der Formel

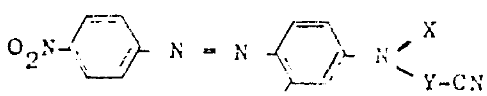

(H oder Methyl)

bekannt, wobei X gegebenenfalls durch —OH substituiertes Alkyl und Y geradkettiges Alkylen bedeutet.

Diese bekannten Farbstoffe entsprechen jedoch nicht voll den Anforderungen der Praxis, insbesondere lassen Farbstärke und Lichtechtheit noch zu wünschen übrig.

Aus der FR-A-2 414 064, der FR-A-2 313 495 und der GB-A-2 028 383 sind Azofarbstoffe bekannt, deren Kupplungskomponente sich, wie die der erfindungsgemäßen Farbstoffe, von Mono-acetyl-m-phenylendiamin ableitet, die jedoch heterocyclische Diazokomponenten der Triazol- der Benzisothiazol- bzw. der Thiazolreihe aufweisen.

Insbesondere ist auch aus der FR-A-2 414 064 ein Farbstoff bekannt, der als Kupplungskomponente m-Acetylamino-N-(β-cyanethyl)-N-allyl-anilin, als Diazokomponente aber Benzyl-cyantriazol enthält. Diese bekannten Farbstoffe konnten die Farbstoffe der Formel I jedoch nicht nahelegen, weil der Fachmann davon ausgehen muß, daß die starken Einflüsse von Heteroatomen im Farbstoffchromophor das Gesamtverhalten der Farbstoffe in überwiegendem Maß bestimmen, und erhebliche Verschiebungen der Hauptabsorptionsbanden und gravierende Unterschiede der Stabilität beim Färben mit sich bringen. Andererseits werden sie auch in völlig anderer Weise in der wässrigen Färbeflotte solvatisiert, wodurch das Färbeverhalten in nicht vorhersehbarer Weise beeinflußt wird.

Aus der Deutschen Offenlegungsschrift 2 707 711 sind Farbstoffe bekannt, die ebenfalls eine carboxyclische Diazokomponente aufweisen and sich nur dadurch von den erfindungsgemäßen Farbstoffen unterscheiden, daß sie in der Diazokomponente in Orthostellung zum Azochromophor zusätzlich eine Nitrogruppe und in der Kupplungskomponenten zusätzlich eine Alkoxygruppe aufweisen, und daß der Alkylrest der zum Azochromophor paraständigen Aminogruppe gesättigt ist. Vergleicht man nun die anwendungstechnischen Eigenschaften nächstvergleichbarer Farbstoffe der deutschen Offenlegungsschrift 2 707 711 und erfindungsgemäße Farbstoffe, beispielsweise des Farbstoffs des Beispiels 1 der deutschen Offenlegungschrift 2 707 711 und des Beispiels 1 der vorliegenden Anmeldung, so zeigt sich, daß der erfindungsgemäße Farbstoff dem bekannten Farbstoff in Bezug auf sein Ausziehvermögen erheblich überlegen ist. Bei Anwendung des erfindungsgemäßen Farbstoffs werden somit Farbstoffverluste vermieden und Kosten für die Reinigung des Färbereiabwassers eingespart. Ferner zeigt sich, daß auch die pH-Empfindlichkeit des erfindungsgemäßen Farbstoffs weitaus besser als die des bekannten Farbstoffs ist, so daß der erfindungsgemäße Farbstoff ohne weiteres beispielsweise in Kombination mit Reaktivfarbstoffen zum Färben von Polyester-Baumwoll-Mischtextilien herangezogen werden kann, während der bekannte Farbstoff für diesen Einsatz ungeeignet ist.

Es wurde somit gefunden, daß gravierende Nachteile der bekannten Farbstoffe überraschenderweise überwunden werden können, wenn die neuen Azofarbstoffe der Formel

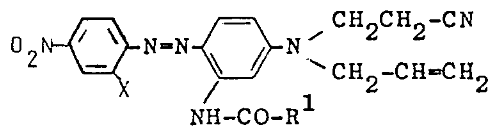
(I)

worin X und $R^1$ die oben Bedeutungen haben, eingesetzt werden.

Bevorzugt sind diejenigen Farbstoffe der Formel I in denen X für Chlor oder Brom steht.

Bevorzugt sind auch diejenigen Farbstoffe der Formel I, in denen $R^1$ Methyl ist.

Besonders bevorzugt sind ferner solche erfindungsgemäßen Farbstoffe, die mehrere bevorzugte Merkmale aufweisen.

Die erfindungsgemäßen Azofarbstoffe werden erhalten, indem man Amine der allgemeinen Formel VI

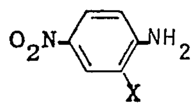
(VI)

worin X die oben angegebene Bedeutung besitzt, diazotiert und mit Kupplungskomponenten der allgemeinen Formel VII

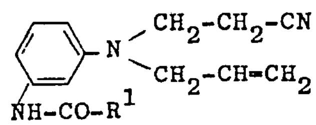

worin $R^1$ Methyl oder Ethyl ist, kuppelt.

Die Diazotierung des Amins der Formel VI geschieht in an sich bekannter Weise durch Einwirkung von salpetriger Säure oder salpetrige Säure abspaltenden Verbindungen.

Beispielsweise können die Aminobenzole in Schwefelsäure, Salzsäure oder in niederen aliphatischen Karbonsäuren, wie z. B. Essigsäure oder Propionsäure, gelöst werden und bei 0 bis 60 °C durch Zusatz von Nitrosylschwefelsäure bzw. Natrium-nitrit diazotiert werden. Die Kupplung wird in wäßrigem Medium in Gegenwart einer Mineralsäure, wie Salzsäure oder Schwefelsäure oder einer starken organischen Säure, wie Ameisensäure, Essigsäure oder Propionsäure bzw. in einer Mischung aus Wasser und einem in Wasser wenig löslichen Alkohol, wie n- oder i-Butanol, bei Temperaturen von 0 bis 30 °C ausgeführt. Bevorzugt wird hierbei der Temperaturbereich von 0 bis 5 °C. Zur Vervollständigung der Kupplungsreaktion kann es zweckmäßig sein, den pH-Wert des Kupplungsansatzes gegen Ende der Reaktion durch Zusatz von Alkalien, wie z. B. von Natriumacetat auf einen Wert von 3 bis 6 zu puffern. Es kann im Hinblick auf die Formierung der Dispersionsfarbstoffe oder hinsichtlich ihrer Farbausbeute von Vorteil sein, ein Gemisch von diazotierten Aminen der Formel VI mit einer Kupplungskomponente der Formel VII oder ein diazotiertes Amin der Formel VI mit einem Gemisch von Kupplungskomponenten der allgem. Formel VII zu kuppeln oder zwei oder mehrere auf getrenntem Wege dargestellte Einzelfarbstoffe zu mischen.

Als Amine der Formel VI kommen beispielsweise in Betracht p-Nitroanilin, 2-Chlor-4-nitro-anilin, 2-Brom-4-nitroanilin.

Die Kupplungskomponenten der Formel VII können aus Aminen der Formel VIII

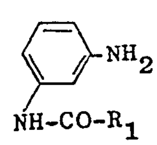
(VIII)

nach an sich bekannten Verfahren durch Umsetzung mit Acrylnitril und Weiterreaktion mit Allylhalogeniden, bevorzugt Allylchlorid in Gegenwart eines säurebindenden Mittels erhalten werden.

Die erfindungsgemäßen Farbstoffe der allgemeinen Formel I eignen sich vorzüglich zum Färben und Bedrucken von synthetischen hydrophoben Fasermaterialien und Mischungen dieser Fasermaterialien mit Cellulosefasern oder Wolle. Bevorzugte hydrophobe Fasermaterialien sind solche aus aromatischen

Polyestern, Celluloseestern und Polyamiden insbesondere Polyestern. Die erfindungsgemäßen Farbstoffe können auch besonders vorteilhaft als Mischung eingesetzt werden.

Die erfindungsgemäß erhaltenen farbstarken Färbungen zeichnen sich durch Klarheit und gute Allgemeinechtheiten, die Polyesterfärbungen beispielsweise durch gute Lichtechtheit, Aufbau, Reduktionsbeständigkeit, Thermofixierechtheit, und pH-Beständigkeit aus.

Gegenüber den nächst-vergleichbaren bekannten Farbstoffen der DAS 11 64 971 oder FR-P 13 82 654 haben die erfindungsgemäßen Farbstoffe insbesondere den Vorteil der höheren Farbstärke und Lichtechtheit ; gegenüber den nächstvergleichbaren Farbstoffen der DE-OS 2 707 711 den Vorteil des erheblich besseren Ausziehvermögens und der erheblich besseren Alkaliresistenz.

Die erfindungsgemäßen Farbstoffe sind auch für Polyester-Woll-Mischungen geeignet, zeigen außerdem gute Echtheitseigenschaften beim Waschen 95 °C, gegenüber Peroxiden, Schweiß sauer und insbesonders alkalisch, Stickoxiden, Abgasen, und sie haben eine gute Hypochlorit-Bleichechtheit und Reib- und Koratronechtheit.

Das Färben des genannten Fasergutes mit den erfindungsgemäßen Farbstoffen erfolgt zweckmäßig aus wäßriger Suspension in Gegenwart von Carriern zwischen etwa 80-100 °C, in Abwesenheit von Carriern zwischen 100 und 140 °C sowie nach dem sogenannten Thermofixierverfahren bei etwa 180-230 °C. Das Färben von Polyester-Wollmischungen erfolgt in Gegenwart von Carriern bei Kochtemperatur oder unter Druck bei 105 °C.

Das Bedrucken der genannten Materialien kann so durchgeführt werden, daß die mit den neuen Farbstoffen bedruckte Ware in Gegenwart eines Carreirs bei Temperaturen zwischen etwa 80-110 °C oder auch in Abwesenheit eines Carriers bei etwa 110 °C bis 180 °C gedämpft oder auch nach dem sogenannten Thermofixierverfahren bei etwa 180-230 °C behandelt wird.

Die erfindungsgemäßen Farbstoffe eignen sich auch zum Färben der vorstehend aufgeführten hydrophoben Materialien aus organischen Lösungsmitteln oder zum Färben in der Masse.

Beispiel 1

a) 17,3 Teile 2-Chlor-4-nitro-anilin werden in 150 Teilen Essigsäure bei 15-20 °C mit 32,6 Teilen 42 %iger Nitrosylschwefelsäure diazotiert und die Diazolösung unter Rühren bei 0-5 °C zu einer Mischung aus 200 Teilen iso-Butanol, 50 g Eis und 24,2 Teilen N-Acetyl-N'-cyanethyl-N'-allyl-m-phenylendiamin gegeben, wobei man während der Kupplung 30 g Eis zugibt. Man rührt 2 Stdn nach, gibt dann eine Lösung von 49 Teilen Natriumacetat in 150 Teilen Wasser zu, rührt 3 Stdn nach, gibt den Ansatz in 500 Teile Wasser. Nach dem Absaugen, Waschen und Trocknen erhält man 40,6 Teile Farbstoffpulver.

b) 1,0 Teile des so erhaltenen feindispergierten Farbstoffs der Formel

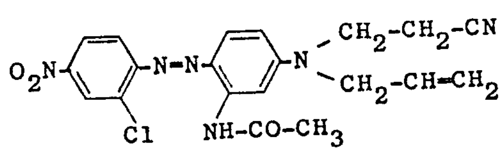

werden in 2 000 Teile Wasser eingerührt. Es wird mit Essigsäure auf einen pH-Wert von 5 eingestellt und mit 4,0 Gewichtsteilen Ammoniumsulfat und 2,0 Teilen eines Naphthalinsulfonsäure-Formaldehyd-Kondensats versetzt.

In die so erhaltene Färbeflotte bringt man 100 Teile eines Polyestergewebes auf Basis Polyäthylenglykolterephthalat und färbt 1 Stunde bei 130 °C.

Nach anschließendem Spülen und Trocknen erhält man eine klare, farbstarke, rote Färbung mit sehr guten coloristischen Eigenschaften, insbesondere sehr guter Licht- und Thermofixierechtheit.

Beispiel 2

a) 16,3 Teile 2-Cyan-4-nitro-anilin werden, wie im Beispiel 1a) beschrieben, diazotiert und mit 25,7 Teilen N-Propionyl-N'-cyanethyl-N'-allyl-m-phenylendiamin gekuppelt und isoliert.

b) 30,0 Teile des nach Beispiel 2a) erhalten Farbstoffs der Formel

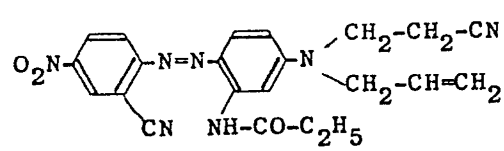

werden in feiner Verteilung einer Druckpaste, die 45,0 Gewichtsteile Johannisbrotkernmehl, 6,0 Gewichtsteile 3-Nitro-benzol-sulfonsaures Natrium und 3,0 Gewichtsteile Zitronensäure auf 1 000 Gewichtsteile enthält, einverleibt. Mit dieser Druckpaste erhält man auf einem Polyestergewebe nach dem Bedrucken, Trocknen und Fixieren im Thermofixierrahmen während 45 Sekunden bei 215 °C, Spülen und Fertigstellung, wie im Beispiel 1b beschrieben einen farbstarken, rubinfarbenen Druck von sehr guten coloristischen Eigenschaften, insbesondere einer sehr guten Licht- und Trockenhitzeplissier- und Trockenhitzefixierechtheit. Der Farbstoff liefert beim Bedrucken von Triacetatgewebe, wenn er in Form der obigen Druckpaste eingesetzt wird und das bedruckte Gewebe nach dem Trocknen 10 Minuten bei 1,5 atü gedämpft, gespült, geseift, erneut gespült und getrocknet wird, einen rubinfarbenen Druck von sehr guten coloristischen Eigenschaften.

Beispiel 3

a) 13,8 Teile 4-Nitro-anilin werden wie im Beispiel 1a) angegeben diazotiert und auf N-Acetyl-N'-cyanethyl-N'-allyl-m-phenylendiamin gekuppelt und der entstandene Farbstoff isoliert.

b) Ein Gewebe aus Polyethylenglykolterephthalat wird auf dem Foulard bei 30 °C mit einer Flotte geklotzt, die 30 Gewichtsteile des nach Beispiel 3a erhaltenen und in feiner Verteilung gebrachten Farbstoffs der Formel

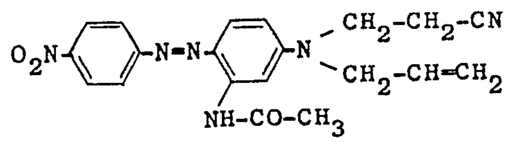

1,0 Gewichtsteile Polyacrylamid vom K-Wert 120 und 0,5 Gewichtsteile eines Polyglykoläthers des Oleylakohols und 968,5 Gewichtsteile Wasser enthält. Nach dem Trocknen wird 60 Sekunden bei 215 °C im Thermofixierrahmen fixiert. Nach anschließendem Spülen und Fertigstellung wie im Beispiel 1b beschrieben, erhält man eine brillante Scharlach-Färbung von sehr guten Echtheitseigenschaften, insbesondere einer sehr guten Lichtechtheit.

Beispiel 4

a) 18,3 Teile 2,4-Dinitroanilin werden wie im Beispiel 1a beschrieben diazotiert und mit N-Acetyl-N'-cyanethyl-N'-allyl-m-phenylendiamin gekuppelt. Man erhält den Farbstoff der Formel

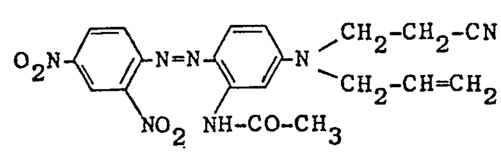

b) 30,0 Gewichtsteile des in Beispiel 5a beschriebenen und in feine Verteilung gebrachten Farbstoffs liefern unter den Bedingungen der in Beispiel 2b angeführten Druckvorschrift einen rubinfarbigen Druck von sehr guten coloristischen Eigenschaften, insbesondere einer sehr guten Licht- und Thermofixierechtheit.

**Ansprüche**

1. Neue wasserunlösliche Azofarbstoffe der allgemeinen Formel I

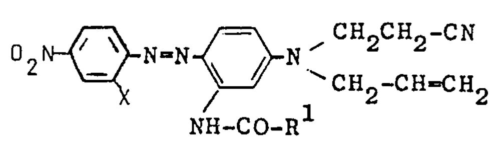

(I)

worin
X Wasserstoff, Chlor, Brom, Cyan oder Nitro und
$R^1$ Methyl oder Ethyl bedeutet.

2. Der Farbstoff der Formel

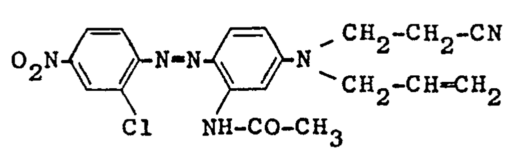

3. Verfahren zur Herstellung von wasserunlöslichen Azofarbstoffen der in Anspruch 1 angegebenen Formel I, dadurch gekennzeichnet, daß man ein Amin der allgemeinen Formel VI

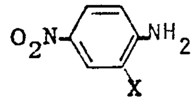

(VI)

worin X die in Anspruch 1 genannte Bedeutung hat, diazotiert und mit einem m-Phenylendiaminderivat der Formel VII

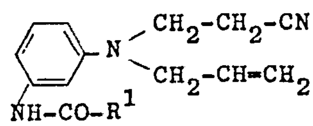

(VII)

worin $R^1$ Methyl oder Ethyl bedeutet, kuppelt.

4. Verwendung der Farbstoffe der Ansprüche 1 bis 2 zum Färben und Bedrucken von hydrophoben Fasermaterialien.

**Claims**

1. New water-insoluble azo dyestuffs of the general formula I

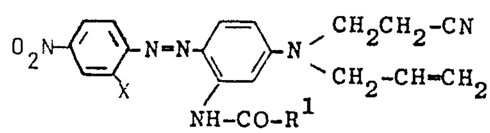

(I)

wherein

X is hydrogen, chloro, bromo, cyano or nitro and

$R^1$ is methyl or ethyl.

2. The dyestuff of the formula

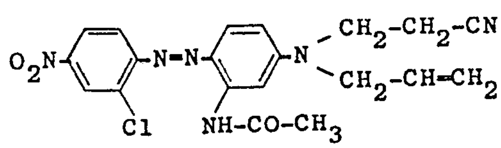

3. Process for the manufacture of water-insoluble azo dyestuffs of the formula I given in Claim 1 characterized in that an amine of the general formula VI

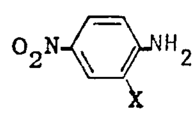

(VI)

wherein X has the meaning given in Claim 1 is diazotized and the diazotized product is coupled with an m-phenylenediamine derivative of the formula VII

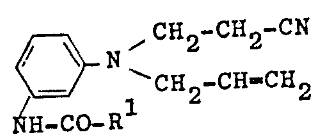

(VII)

wherein $R^1$ is methyl or ethyl.

4. Use of the dyestuffs of Claims 1 to 2 for dyeing and printing hydrophobic fibre materials.

**Revendications**

1. Nouveaux colorants azoïques insolubles dans l'eau qui répondent à la formule générale I

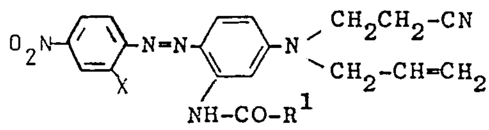

(I)

dans laquelle

X représente un atome d'hydrogène, de chlore ou de brome ou un radical cyano ou nitro et $R^1$ représente un radical méthyle ou éthyle.

2. Colorant de formule

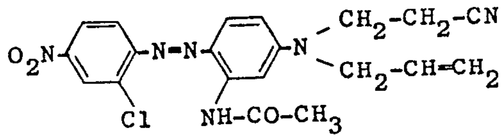

3. Procédé de préparation de colorants azoïques insolubles dans l'eau qui répondent à la formule I définie à la revendication 1, procédé caractérisé en ce qu'on diazote une amine répondant à la formule générale VI

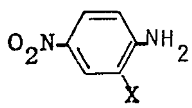

(VI)

dans laquelle X a la signification donnée à la revendication 1, et on copule le diazoïque avec un dérivé de la m-phénylène-diamine répondant à la formule VII

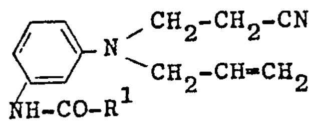

(VII)

dans laquelle $R^1$ représente un radical méthyle ou éthyle.

4. Application des colorants selon l'une des revendications 1 et 2 à la teinture et à l'impression de matières fibreuses hydrophobes.